# EUROPEAN PATENT SPECIFICATION

(11) **EP 4 331 897 B1**
(45) Date of publication and mention of the grant of the patent: **26.02.2025**
(21) Application number: 23172318.0
(22) Date of filing: 09.05.2023
(51) Int. Cl.: B60L 50/64, B60L 50/60, H02K 5/24

(54) **COMPACT ELECTRICALLY-DRIVEN POWER UNIT OF BATTERY PACK AND WORKING MACHINE**
KOMPAKTE ELEKTRISCH ANGETRIEBENE ANTRIEBSEINHEIT EINES BATTERIEPACKS UND ARBEITSMASCHINE
UNITÉ D'ALIMENTATION ÉLECTRIQUE COMPACTE DE BLOC-BATTERIE ET MACHINE DE TRAVAIL

(30) Priority: 02.09.2022 CN 202211071749
(43) Date of publication of application: 06.03.2024
(73) Proprietor: Chongqing Tuosi Electric Power Technology Co.,Ltd., Chongqing (CN)
(72) Inventor: JIANG, Chenglin, Chongqing (CN)
(74) Representative: Vossius & Partner Patentanwälte Rechtsanwälte mbB

(56) References cited:
- EP-A1- 1 666 785
- EP-A1- 3 220 518
- EP-A1- 3 549 432
- EP-A1- 3 673 722
- EP-A1- 3 993 235
- WO-A1-2020/077829
- US-A1- 2021 184 535

## Description

### TECHNICAL FIELD

The present invention relates to the technical field of general power, and in particular to an electrically-driven power unit of a compact battery pack and a working machine.

### BACKGROUND

With the intensive study of environmental issues, more power units are being driven by electric power instead of fuel.

The specification of the Chinese invention patent CN112602255A discloses an electric power unit, which comprises a motor and a battery pack for supplying power to the motor, wherein the electric power unit can be mounted on various working machines in place of a fuel engine, and achieves miniaturization and versatility of the electric power unit to some extent.

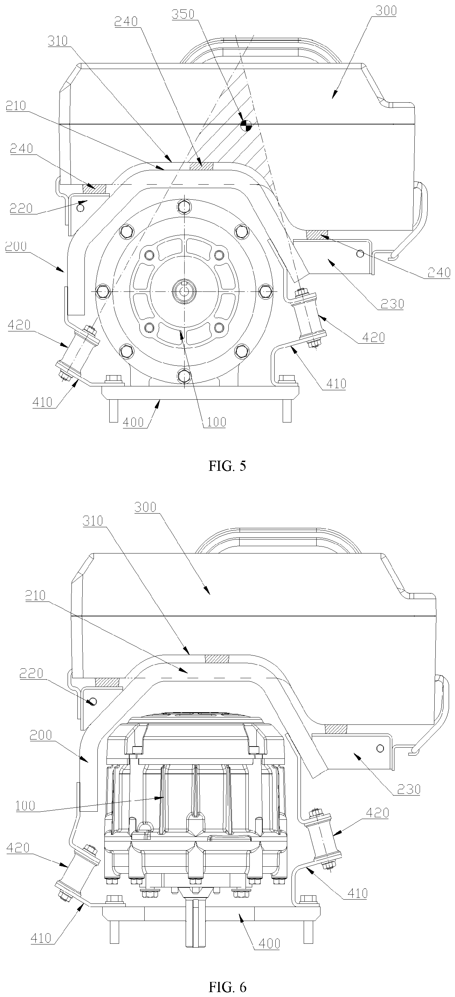

As can be seen from the specification of the above patent and FIG. 5A, the battery pack in the patent is shaped as a cuboid and is mounted at the top of the motor through a frame. In practical application, the height of the electric power unit is higher than that of the common fuel engine on the market due to the shape of the battery pack. Therefore, how to reduce the overall height of the battery pack and meanwhile ensure the endurance of the battery pack under the condition of satisfying the overall size limitation of the fuel engine is a problem to be overcome in a case that the electric power unit replaces the fuel engine.

EP3993235A1 is another known example and shows the preamble of claim 1.

Other examples are known from US2021/184535A1, EP3220518A1, WO2020/077829 A1, EP3673722A1, EP3549432A1 or EP1666785A1.

### SUMMARY

Aiming at the defects in the prior art, the present invention provides an electrically-driven power unit of a compact battery pack and a working machine, so that the overall height of the electrically-driven power unit is reduced on the premise of not reducing the endurance of the battery pack so as to satisfy the overall mounting size limitation.

In an aspect, the present invention provides an electrically-driven power unit of a compact battery pack, which comprises a motor and a battery pack, wherein the motor is mounted on a base, the battery pack is supported on an upper part of the motor through a supporting frame, the supporting frame is shaped around the periphery of the motor, an arch-shaped supporting portion matched with the upper part of the motor is formed on an upper part of the supporting frame, a concave portion matched with the arch-shaped supporting portion is arranged at a bottom of the battery pack, and the arch-shaped supporting portion of the supporting frame is supported in the concave portion of the battery pack.

Furthermore, a first mounting portion and a second mounting portion are respectively arranged on both sides of the arch-shaped supporting portion on the supporting frame, and areas of the bottom of the battery pack located on both sides of the concave portion are respectively supported on the first mounting portion and the second mounting portion.

Furthermore, cushion pads are arranged between the bottom of the battery pack and the arch-shaped supporting portion, the first mounting portion and the second mounting portion on the supporting frame.

Furthermore, a side part of the first mounting portion is vertically aligned with a side part on a same side of the supporting frame, and the second mounting portion is of a cantilever structure formed by extending the side part of the supporting frame outwards.

Furthermore, the battery pack comprises a box body and a battery set and a battery management system arranged in the box body, wherein an upper inclination angle of the box body on one side of the second mounting portion is set as a mounting space for the battery management system, and a rest part in the box body is set as a mounting space for the battery set.

Furthermore, supports are arranged on both sides of the motor on the base, lower parts of both sides of the supporting frame are respectively mounted on the supports on the corresponding sides through elastic vibration damping bodies, and the elastic vibration damping bodies on both sides are obliquely arranged, such that axes of the elastic vibration damping bodies on both sides intersect above;
a center of gravity of the battery pack is located in a lower area where the axes of the elastic vibration damping bodies on both sides intersect.

Furthermore, the battery set is supported in the box body through vibration damping blocks.

Furthermore, the battery set comprises a battery cell holder and a plurality of cylindrical battery cells longitudinally distributed on the battery cell holder in parallel, the cylindrical battery cells being distributed in a regular triangle shape. Furthermore, an output shaft of the motor is in a horizontal or vertical direction.

In another aspect, the present invention provides a working machine, which comprises the electrically-driven power unit of a compact battery pack described above.

The beneficial effects of the present invention are as follows:
The supporting frame of the present application is shaped around the periphery of the motor to form an arch-shaped supporting portion fitting on the upper part of the motor. Simultaneously, through the arrangement of the concave portion at the bottom of the battery pack, the battery pack is no longer a simple cuboid, but is designed into a special molding of fitting the arch-shaped supporting portion of the supporting frame, making full use of the space of the side part of the motor, and thus realizing the effective utilization in space. The battery pack structure is more compact, and the overall height of the electrically-driven power unit can be reduced on the premise of not reducing the endurance of the battery pack, so as to satisfy the overall mounting size limitation, which is beneficial to realizing the miniaturization of the electrically-driven power unit and further replacing the fuel engine.

### BRIEF DESCRIPTION OF THE DRAWINGS

In order to more clearly illustrate the technical schemes in the embodiments of the present invention or in the prior art, the drawings required to be used in the description of the embodiments or the prior art are briefly introduced below. In all of the drawings, like elements or parts are generally identified by like reference numerals. In the drawings, elements or parts are not necessarily drawn to actual scale.
FIG. 1 is a schematic structural diagram in a case that an output shaft of a motor is in a horizontal direction according to an embodiment of the present invention;
FIG. 2 is a schematic block diagram of a battery pack according to an embodiment of the present invention;
FIG. 3 is an exploded diagram of a battery pack according to an embodiment of the present invention;
FIG. 4 is a sectional view of the interior of a battery pack according to an embodiment of the present invention;
FIG. 5 is a schematic diagram of a position of a center of gravity of a battery pack according to an embodiment of the present invention; and
FIG. 6 is a schematic structural diagram in a case that an output shaft of a motor is in a vertical direction according to another embodiment of the present invention.

In the figures, 100 is motor; 200 is supporting frame; 210 is arch-shaped supporting portion; 220 is first mounting portion; 230 is second mounting portion; 240 is cushion pad; 300 is battery pack; 310 is concave portion; 320 is box body; 321 is lower box body; 322 is upper box body; 323 is vibration damping block; 330 is battery set; 331 is battery cell holder; 332 is cylindrical battery cell; 340- is battery management system; 350 is center of gravity; 400 is base; 410 is support; 420 is elastic vibration damping body.

### DETAILED DESCRIPTION

Examples of the technical schemes of the present invention will be described in detail below with reference to the accompanying drawings. The following examples are only for illustrating the technical schemes of the present invention more clearly, and therefore are only used as examples and cannot be used to limit the protection scope of the present invention.

It should be noted that the terms or words used in the present application should not be construed as being limited to general or dictionary meanings unless otherwise specified, but interpreted only as meanings and concepts conforming to the technical idea of the present invention on the basis of the principle that "the inventor appropriately defines the concept of the terms in order to describe his own invention in the best way".

### Embodiment 1

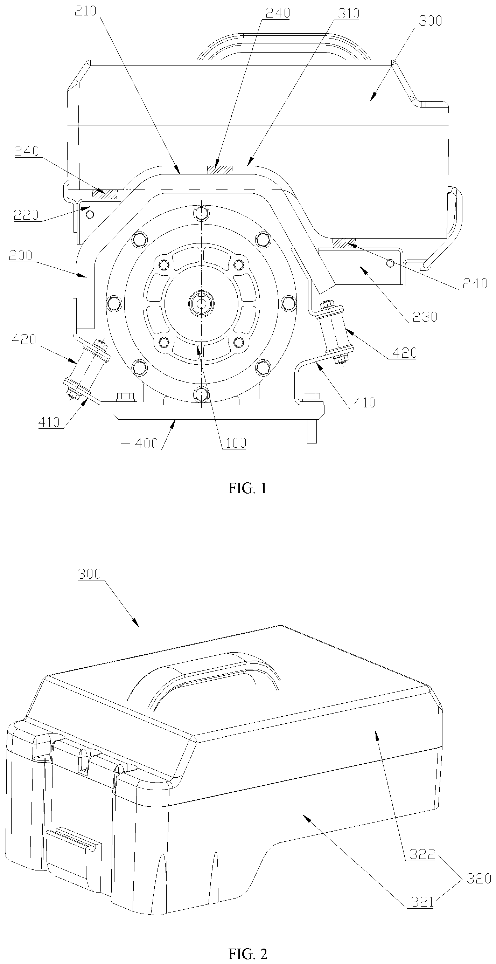

As shown in FIGs. 1-5, Embodiment 1 provides an electrically-driven power unit of a compact battery pack, which comprises a motor 100 and a battery pack 300, wherein
the motor 100 is mounted on a base 400, an output shaft of the motor 100 is in a horizontal direction in this embodiment, and the base 400 may also be an object to be carried by the electrically-driven power unit.

The battery pack 300 is supported on an upper part of the motor 100 through a supporting frame 200, the supporting frame 200 is shaped around the periphery of the motor 100, an arch-shaped supporting portion 210 matched with the upper part of the motor 100 is formed on an upper part of the supporting frame 200, a concave portion 310 matched with the arch-shaped supporting portion 210 is arranged at a bottom of the battery pack 300, and the arch-shaped supporting portion 210 of the supporting frame 200 is supported in the concave portion 310 of the battery pack 300.

The supporting frame 200 of the present application is shaped around the periphery of the motor 100 to form an arch-shaped supporting portion 210 fitting on the upper part of the motor 100. Simultaneously, through the arrangement of the concave portion 310 at the bottom of the battery pack 300, the battery pack 300 is no longer a simple cuboid, but is designed into a special molding of fitting the arch-shaped supporting portion 210 of the supporting frame 200, making full use of the space of the side part of the motor 100, and thus realizing the effective utilization in space. The battery pack structure is more compact, the overall height of the electrically-driven power unit can be reduced on the premise of not reducing the endurance of the battery pack 300, which is beneficial to realizing the miniaturization of the electrically-driven power unit and further replacing the fuel engine.

In this embodiment, referring to FIG. 1, a first mounting portion 220 and a second mounting portion 230 are respectively arranged on both sides of the arch-shaped supporting portion 210 on the supporting frame 200, and areas of the bottom of the battery pack 300 located on both sides of the concave portion 310 are respectively supported on the first mounting portion 220 and the second mounting portion 230, such that the battery pack 300 can be more stably supported on the supporting frame 200.

In this embodiment, the battery pack 300 is directly mounted on the supporting frame 200, and in order to form the cushioning between the supporting frame 200 and the battery pack 300, cushion pads 240 are arranged between the bottom of the battery pack 300 and the arch-shaped supporting portion 210, the first mounting portion 220 and the second mounting portion 230 on the supporting frame 200, and the cushion pads 240 can further damp vibration of the battery pack 300 during operation; preferably, the cushion pads 240 in this embodiment are fixed at the bottom of the battery pack 300. If the battery pack 300 falls, the cushion pads 240 at the bottom of the battery pack will contact the ground before the battery pack 300, so as to play a role of buffer protection.

In this embodiment, a side part of the first mounting portion 220 is vertically aligned with a side part on a same side of the supporting frame 200, and the second mounting portion 230 is of a cantilever structure formed by extending the side part of the supporting frame 200 outwards. When the battery pack 300 is mounted on the supporting frame 200, the side part of the battery pack 300 supported on the first mounting portion 220 is substantially aligned with the side part of the supporting frame 200, and the side part of the battery pack 300 supported on the second mounting portion 230 extends out of the side part of the supporting frame 200, without any mechanism arranged on the lower side of the second mounting portion 230.

In this embodiment, referring to FIGs. 2, 3, and 4, the battery pack 300 comprises a box body 320, and a battery set 330 and a battery management system 340 arranged in the box body 320, wherein an upper inclination angle of the box body 320 on one side of the second mounting portion 230 is set as a mounting space for the battery management system 340, and a rest part of the box body 320 is set as a mounting space for the battery set 330.

In this embodiment, one side end of the battery pack 300 is supported on the first mounting portion 220 and is substantially aligned with the side part of the supporting frame 200, the other side end of the battery pack 300 is supported on the second mounting portion 230 and extends out of the side part of the supporting frame 200, and the center of gravity 350 of the battery pack 300 makes an offset toward the side extending out of the supporting frame 200. However, the closer the center of gravity 350 of the battery pack 300 is to the center of the motor 100, the better the overall stability of the combination of the battery pack 300 and the motor 100. Since the per unit weight of a battery set 330 is much greater than that of the battery management system 340, in the present application, through the arrangement of the battery management system 340 on an upper inclination angle of the box body 320 on one side of the second mounting portion 230, and filling the rest part of the box body 320 with the battery set 330, the center of gravity 350 of the battery pack 300 can be close to one side of the center of the motor 100 as far as possible, and meanwhile the space can be made full use of.

Referring to FIG. 5, in this embodiment, supports 410 are arranged on both sides of the motor 100 on the base 400, lower parts of both sides of the supporting frame 200 are respectively mounted on the supports 410 on the corresponding sides through elastic vibration damping bodies 420, and the elastic vibration damping bodies 420 on both sides are obliquely arranged, such that axes of the elastic vibration damping bodies 420 on both sides intersect above. The center of gravity 350 of the battery pack 300 is located in a lower area where the axes of the elastic vibration damping bodies 420 on both sides intersect.

In the present application, the battery pack 300 is designed according to the above scheme, such that the center of gravity 350 of the battery pack 300 is centered as much as possible, and then the inclination angles of the elastic vibration damping bodies 420 on both sides of the supporting frame 200 are designed, such that the center of gravity 350 of the battery pack 300 is located in the lower area where the axes of the elastic vibration damping bodies 420 on both sides intersect. Through the control of the center of gravity 350 of the battery pack 300 to be located in the lower area where the axes of the elastic vibration damping bodies 420 on both sides intersect, the battery pack 300 is stably supported, and a good vibration damping effect is also provided for the battery pack 300, and the use requirements of the working machine with large vibration can be satisfied.

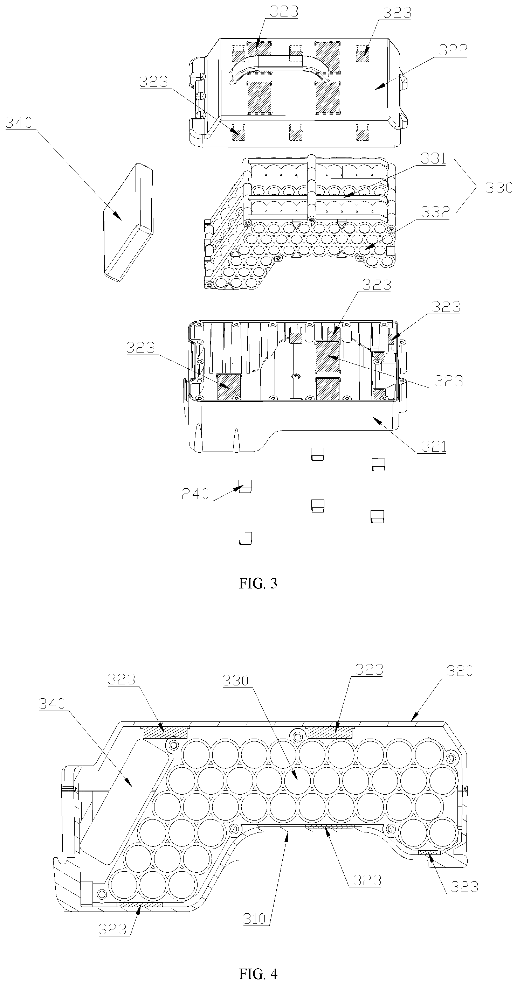

In this embodiment, referring to FIG. 3, the battery set 330 is supported in the box body 320 through vibration damping block 323. Specifically, the box body 320 in this embodiment comprises a lower box body 321 and an upper box body 322, wherein vibration damping blocks 323 are arranged at the bottom and the periphery of the lower box body 321, and at the top and the periphery of the upper box body 322, and the vibration damping blocks 323 can play a role of vibration damping and buffering on the battery set 330 in the box body 320.

In this embodiment, referring to FIGs. 3 and 4, the battery set 330 comprises a battery cell holder 331 and a plurality of cylindrical battery cells 332 longitudinally distributed on the battery cell holder 331 in parallel. The battery set 330 adopts a cylindrical battery cell structure which is convenient to form a unique molding of the battery pack 300, and then it is easy to realize the surrounding design of the battery pack 300 on the periphery of the motor 100. The cylindrical battery cells 332 distributed in a mode of arranging in the same direction as the output direction have the advantages of lower center of gravity, better vibration absorption performance and more stable overall structure compared with those distributed in a vertical arrangement mode.

For reference, the cylindrical battery cells 332 are distributed in a regular triangle shape, so as to improve the arrangement efficiency of the cylindrical battery cells 332.

### Embodiment 2

As shown in FIG. 6, Embodiment 2 provides an electrically-driven power unit of a compact battery pack; Embodiment 2 is different from Embodiment 1 in that the output shaft of the motor 100 in Embodiment 2 is in a vertical direction.

The direction of the output shaft of the motor 100 of the power unit is divided into a horizontal direction and a vertical direction, and the present invention can simultaneously satisfy the requirements of adapting to the two output directions due to its universality.

The battery pack 300 is specially shaped with a concave bottom, so that the battery pack 300 and the motor 100 can be assembled and combined with good space efficiency even when the output shaft of the motor 100 is in a vertical direction. Here, the working machine having vertical output requirements can be mounted properly only by individually setting the supporting frame 200.

In a case that the output shaft of the motor 100 is in the horizontal direction, the motor 100 and the battery pack 300 are designed in a general manner, and in this embodiment, various types of working machines can be mounted properly only by specially setting the supporting frame 200 and the appearance shell.

### Embodiment 3

The present invention provides a working machine, which comprises the electrically-driven power unit of a compact battery pack described above and includes a construction machine, an agricultural machine, a garden machine and the like, such as a flat plate tamper, a cement grinder, a mini-tiller and a mower.

## Claims

1. An electrically-driven power unit of a compact battery pack, comprising a motor (100) and a battery pack (300), wherein the motor is mounted on a Z base (400), the battery pack is supported on an upper part of the motor through a supporting frame (200), the supporting frame is shaped around a periphery of the motor, an arch-shaped supporting portion (210) matched with the upper part of the motor is formed on an upper part of the supporting frame, **characterized by** a concave portion (310) matched with the arch-shaped supporting portion is arranged at a bottom of the battery pack, and the arch-shaped supporting portion of the supporting frame is supported in the concave portion of the battery pack.

2. The electrically-driven power unit of a compact battery pack according to claim 1, wherein a first mounting portion (220) and a second mounting portion (230) are respectively arranged on both sides of the arch-shaped supporting portion (210) on the supporting frame, and areas of the bottom of the battery pack located on both sides of the concave portion are respectively supported on the first mounting portion and the second mounting portion.

3. The electrically-driven power unit of a compact battery pack according to claim 2, wherein cushion pads (240) are arranged between the bottom of the battery pack (300) and the arch-shaped supporting portion, the first mounting portion and the second mounting portion on the supporting frame.

4. The electrically-driven power unit of a compact battery pack according to claim 2 or 3, wherein a side part of the first mounting portion (220) is vertically aligned with a side part on a same side of the supporting frame, and the second mounting portion (230) is of a cantilever structure formed by extending the side part of the supporting frame (200) outwards.

5. The electrically-driven power unit of a compact battery pack according to any one of claims 2 to 4, wherein the battery pack comprises a box body (320) and a battery set (330) and a battery management system (340) arranged in the box body, wherein an upper inclination angle of the box body on one side of the second mounting portion is set as a mounting space for the battery management system, and a rest part in the box body is set as a mounting space for the battery set.

6. The electrically-driven power unit of a compact battery pack according to any one of claims 1 to 5, wherein
supports (410) are arranged on both sides of the motor (100) on the base, lower parts of both sides of the supporting frame are respectively mounted on the supports on the corresponding sides through elastic vibration damping bodies (420), and the elastic vibration damping bodies on both sides are obliquely arranged, such that axes of the elastic vibration damping bodies on both sides intersect above;
a center of gravity of the battery pack is located in a lower area where the axes of the elastic vibration damping bodies on both sides intersect.

7. The electrically-driven power unit of a compact battery pack according to claim 5 or 6, wherein the battery set is supported in the box body through vibration damping blocks (323).

8. The electrically-driven power unit of a compact battery pack according to any one of claims 5 to 7, wherein the battery set comprises a battery cell holder (331) and a plurality of cylindrical battery cells longitudinally distributed on the battery cell holder in parallel, the cylindrical battery cells being distributed in a regular triangle shape.

9. The electrically-driven power unit of a compact battery pack according to any one of claims 1 to 8, wherein an output shaft of the motor (100) is in a horizontal or vertical direction.

10. A working machine, comprising the electrically-driven power unit of a compact battery pack according to any one of claims 1 to 9.

## Patentansprüche

1. Elektrisch betriebene Antriebseinheit eines kompakten Batteriepacks, die einen Motor (100) und einen Batteriepack (300) aufweist, wobei der Motor auf einer Basis (400) montiert ist, der Batteriepack auf einem oberen Teil des Motors durch einen Tragrahmen (200) gehalten wird, der Tragrahmen um einen Umfang des Motors herum geformt ist, ein bogenförmiger Tragabschnitt (210), der an den oberen Teil des Motors angepasst ist, an einem oberen Teil des Tragrahmens ausgebildet ist, **dadurch gekennzeichnet, dass** ein konkaver Abschnitt (310), der an den bogenförmigen Tragabschnitt angepasst ist, an einem Boden des Batteriepacks angeordnet ist, und der bogenförmige Tragabschnitt des Tragrahmens in dem konkaven Abschnitt des Batteriepacks gehalten wird.

2. Elektrisch betriebene Antriebseinheit eines kompakten Batteriepacks nach Anspruch 1, wobei
ein erster Befestigungsabschnitt (220) und ein zweiter Befestigungsabschnitt (230) jeweils auf beiden Seiten des bogenförmigen Tragabschnitts (210) auf dem Tragrahmen angeordnet sind und Bereiche des Bodens des Batteriepacks, die sich auf beiden Seiten des konkaven Abschnitts befinden, j eweils auf dem ersten Befestigungsabschnitt und dem zweiten Befestigungsabschnitt gehalten werden.

3. Elektrisch betriebene Antriebseinheit eines kompakten Batteriepacks nach Anspruch 2, wobei
Dämpfungspolster (240) zwischen dem Boden des Batteriepacks (300) und dem bogenförmigen Tragabschnitt, dem ersten Befestigungsabschnitt und dem zweiten Befestigungsabschnitt am Tragrahmen angeordnet sind.

4. Elektrisch betriebene Antriebseinheit eines kompakten Batteriepacks nach Anspruch 2 oder 3, wobei
ein Seitenteil des ersten Befestigungsabschnitts (220) vertikal mit einem Seitenteil auf derselben Seite des Tragrahmens ausgerichtet ist und der zweite Befestigungsabschnitt (230) eine freitragende Struktur aufweist, die durch Erweitern des Seitenteils des Tragrahmens (200) nach außen ausgebildet ist.

5. Elektrisch betriebene Antriebseinheit eines kompakten Batteriepacks nach einem der Ansprüche 2 bis 4, wobei
der Batteriepack einen Gehäusekörper (320) und einen Batteriesatz (330) und ein in dem Gehäusekörper angeordnetes Batteriemanagementsystem (340) aufweist, wobei ein oberer Neigungswinkel des Gehäusekörpers auf einer Seite des zweiten Befestigungsabschnitts als ein Montageraum für das Batteriemanagementsystem festgelegt ist, und ein Restteil in dem Gehäusekörper als ein Montageraum für den Batteriesatz festgelegt ist.

6. Elektrisch betriebene Antriebseinheit eines kompakten Batteriepacks nach einem der Ansprüche 1 bis 5, wobei
Halterungen (410) auf beiden Seiten des Motors (100) auf der Basis angeordnet sind, untere Teile beider Seiten des Tragrahmens jeweils über elastische Schwingungsdämpfungskörper (420) auf den Halterungen auf den entsprechenden Seiten befestigt sind, und die elastischen Schwingungsdämpfungskörper auf beiden Seiten schräg angeordnet sind, so dass sich Achsen der elastischen Schwingungsdämpfungskörper auf beiden Seiten oben schneiden;
ein Schwerpunkt des Batteriepacks sich in einem unteren Bereich befindet, in dem sich die Achsen der elastischen Schwingungsdämpfungskörper auf beiden Seiten schneiden.

7. Elektrisch betriebene Antriebseinheit eines kompakten Batteriepacks nach Anspruch 5 oder 6, wobei
der Batteriesatz über schwingungsdämpfende Blöcke (323) in dem Gehäusekörper gehalten wird.

8. Elektrisch betriebene Antriebseinheit eines kompakten Batteriepacks nach einem der Ansprüche 5 bis 7, wobei
der Batteriesatz einen Batteriezellenhalter (331) und mehrere zylindrische Batteriezellen aufweist, die in Längsrichtung parallel auf dem Batteriezellenhalter verteilt sind, wobei die zylindrischen Batteriezellen in einer regelmäßigen Dreiecksform verteilt sind.

9. Elektrisch betriebene Antriebseinheit eines kompakten Batteriepacks nach einem der Ansprüche 1 bis 8, wobei
eine Abtriebswelle des Motors (100) in horizontaler oder vertikaler Richtung verläuft.

10. Arbeitsmaschine, die die elektrisch betriebene Antriebseinheit eines kompakten Batteriepacks nach einem der Ansprüche 1 bis 9 aufweist.

## Revendications

1. Unité d'alimentation électrique d'un bloc-batterie compact, comprenant un moteur (100) et un bloc-batterie (300), où le moteur est monté sur une base (400), le bloc-batterie est supporté sur une partie supérieure du moteur par un cadre de support (200), le cadre de support est formé autour d'une périphérie du moteur, une partie de support en forme d'arc (210) correspondant à la partie supérieure du moteur est formée sur une partie supérieure du cadre de support, **caractérisée en ce qu'**une partie concave (310) correspondant à la partie de support en forme d'arc est prévue sur le fond de la batterie, et **en ce que** la partie de support en forme d'arc du cadre de support est supportée dans la partie concave de la batterie.

2. Unité d'alimentation électrique d'un bloc-batterie compact selon la revendication 1, où une première partie de montage (220) et une deuxième partie de montage (230) sont respectivement disposées de part et d'autre de la partie de support en forme d'arc (210) sur le cadre de support, et des surfaces du fond du bloc-batterie situées de part et d'autre de la partie concave sont respectivement supportées par la première partie de montage et la deuxième partie de montage.

3. Unité d'alimentation électrique d'un bloc-batterie compact selon la revendication 2, où des coussinets (240) sont disposés entre le fond du bloc-batterie (300) et la partie de support en forme d'arc, la première partie de montage et la deuxième partie de montage sur le cadre de support.

4. Unité d'alimentation électrique d'un bloc-batterie compact selon la revendication 2 ou la revendication 3, où
une partie latérale de la première partie de montage (220) est alignée verticalement avec une partie latérale du même côté du cadre de support, et la deuxième partie de montage (230) a une structure en porte-à-faux formée par extension vers l'extérieur de la partie latérale du cadre de support (200).

5. Unité d'alimentation électrique d'un bloc-batterie compact selon l'une des revendications 2 à 4, où
le bloc-batterie comprend un corps de boîtier (320), un ensemble de batteries (330) et un système de gestion de batterie (340) disposé dans le corps de boîtier, où un angle d'inclinaison supérieur du corps de boîtier d'un côté de la deuxième partie de montage est défini comme un espace de montage pour le système de gestion de batterie, et une partie restante dans le corps de boîtier est définie comme un espace de montage pour l'ensemble de batteries.

6. Unité d'alimentation électrique d'un bloc-batterie compact selon l'une des revendications 1 à 5, où
des supports (410) sont disposés de part et d'autre du moteur (100) sur la base, les parties inférieures des deux côtés du cadre de support sont respectivement montées sur les supports des côtés correspondants au moyen de corps élastiques amortisseurs de vibrations (420), et les corps élastiques amortisseurs de vibrations sont disposés obliquement sur les deux côtés, de sorte que les axes des corps élastiques amortisseurs de vibrations se croisent au-dessus des deux côtés ;
le centre de gravité de la batterie est situé dans une zone inférieure où se croisent les axes des corps élastiques amortisseurs de vibrations bilatéraux.

7. Unité d'alimentation électrique d'un bloc-batterie compact selon la revendication 5 ou la revendication 6, où
l'ensemble de batteries est supporté dans le corps de boîtier par des blocs amortisseurs de vibrations (323).

8. Unité d'alimentation électrique d'un bloc-batterie compact selon l'une des revendications 5 à 7, où
l'ensemble de batteries comprend un support d'éléments de batterie (331), et une pluralité d'éléments de batterie cylindriques répartis parallèlement en longueur sur le support d'éléments de batterie, lesdits éléments de batterie cylindriques étant distribués en forme de triangle régulier.

9. Groupe motopropulseur à entraînement électrique d'un bloc-batterie compact selon l'une des revendications 1 à 8, où
l'arbre de sortie du moteur (100) est horizontal ou vertical.

10. Engin de chantier, comprenant l'unité d'alimentation électrique d'un bloc-batterie compact selon l'une des revendications 1 à 9.
